# EUROPEAN PATENT APPLICATION

(11) **EP 2 363 838 A1**
(43) Date of publication of application: **07.09.2011**
(21) Application number: 10382047.8
(22) Date of filing: 01.03.2010
(51) Int. Cl.: G07F 7/08

(54) **Telemetry payment system by means of multifunction card**

(71) Applicant: Prepaytrans Gestion Empresarial, S.L., 28223 Pozuelo de Alarcon (ES)
(72) Inventor: Martinez Martinez, Javier, 28223, POZUELO DE ALARCON (ES)
(74) Representative: Temino Ceniceros, Ignacio

(57) **Abstract**

Multifunction card that is essentially comprised of a card body (1), which is comprised of initial and transparent radio-frequency media (2), a second set of electronic media for data storage that is visible, (3) and a third set of magnetic media for data storage (4) in the form of a magnetic strip and is characterized because each of these mediums are configured to integrate at least one of the functions selected between: transportation card; cards belonging to a particular group; presence control applications; payment applications whether it be with a credit card, debit card or closed payment card; and applications such as cash card, gift card or a combination of the applications previously mentioned.

## Description

The purpose of this invention is a multifunction card and the telemetry payment system using this card, which integrates into a single piece of hardware, integrated non-visible radio frequency media as well as a physical circuit and a single magnetic strip; all this in such a way that allows numerous uses and combinations thereof, facilitating its use in the telemetry payment system. This invention fits within the technical credit cards sector with multiple applications.

### Prior state of the art

There are different types of known bank cards, which also may serve multiple uses for example, virtual cards used in Internet type networks, pure bank cards with magnetic strip, or the mixed banking type (credit/debit) with electronic wallet; in other words, combining magnetic strip and electronic circuit. In this same way, card payments for example, in restaurants or loyalty charge cards are well known in the current state of the art of this invention.

Independently and in the same way, the multipurpose card has become popular aside from those used strictly for banking purposes for example, cards used for public transportation, cards belonging to a particular group (university cards, installation access cards, etc.), presence or working hour control, amongst many others.

A first technical problem that this invention attempts to resolve is the unification into a single piece of hardware; in such a way that results in a more convenient service for the user by centralizing all the above mentioned uses into a single card.

The closest precedent is document WO99/03057, which describes a multifunction card that can be used as a prepaid phone card, debit card, commercial loyalty card and medical card. Each card has its own identification number that includes a bank identification number with which the communication links are established. The system may be accessed from each point of sale. It's this point of sale that treats the card as a credit or debit card and redirects the transaction data to a processing element by means of the banking system. This processing element coordinates the different databases that correspond with the different card functions.

The main disadvantage of this system lies in its limited uses, since the lack of its own RF prevents it from being used in specific areas without needing to access a database or online communications, as in transport ticket applications and/or presence control because the information is pre-recorded in these RF elements.

Likewise, this card is dependent on the points of sale. Also, these cards can only access the database through these points, the processing elements and the databases, which requires these cards be independent of these points of sale

The possible use as a gift card also holds clear disadvantages because it can only be used in a closed circuit. It's convenient to have a gift card, whose performance can be measured for example, open card, closed, by FUC (a unique code in Spain that identifies the centre that makes the request for authorization to purchase, cancel or refund to a bank card; similar identifiers exist in other countries) by Business Activity Sector (Codes that identify a group of businesses with FUC by activity sector), by hourly schedule, etc.

Finally, there is no known state of the art document that mentions or insinuates the possibility of establishing money transfers between the different card functions, which is a fundamental factor for a correct usage of the multifunction card as the user's only device used for payment (or other services).

### Description of the invention

The objective of this invention is a multifunction card that is comprised of at least a card body, which in a transparent way integrates RFID (radio-frequency) with numerous recorded data. Furthermore, the card includes a classic magnetic strip and an electronic circuit of the type used in wallet cards. All of these means or elements are configured to define a number of uses or tools, any of which can be configured in any of the three physical media available (magnetic strip, electronic circuit and RFID elements); these tools have the following uses, which are not limited to: Transportation cards; cards belonging to a particular group like medical or university cards; for presence control applications; payments applications such as credit, debit or closed payment cards such as meal cards; applications such as wallet cards and gift cards.

As previously mentioned, every piece of hardware can be configured for a specific use without a real limitation between combinations, except for those derived from specific applications that lean towards use in a determined piece of hardware because of compatibility with current systems and readers and not because of lack of capability on the part of this invention's card. As an example, banking applications because of their external constraints derived from their link with the banking system, in general will be placed in the most suitable and common physical media, which are the magnetic strips; while the transportation card can be configured in the RFID and access control to a specific installation on the physical chip.

The multifunction card is integrated in a telemetric payment system comprised of remote system access, operation verification and means of controlling the balance of each process of the multifunction card of claim 1, based on given and configurable rules provided by the user and/or system administrator, which determine the balances, their limits and/or subdivisions of each of these balances. Rules that enable balance transfers between functions and remote cash deposit in each of the multifunction card functions.

The telemetry payment system, depending on the type of card operation to be performed has n balance available, balance depending on the type of operation performed, limiting card purchases using multiple parameters such as the amount, date, sector or any other where there is a system monitoring the card at each point of sale; and also, where the card and system are configured so that each function or media has a pre-determined balance assigned, which is capable of being subdivided, and each subdivision being able to be transferred.

As an option, the multifunction card has a virtual network representation, in other words, a virtual card number for this purpose is assigned and maintained in the database, which enables to carry out transactions on the card balance. This is directly related with the activation or deactivation of an account. We define an account as an amount or balance for internet shopping and it may be paid via remote application, SMS, electronic mail, or other similar options when not in use and activated only when it is going to be used, thus preventing shopping fraud.

The card in this invention may be made of plastic, paper, or cardboard or other similar material that enables it to maintain the characteristics defined by this invention.

Throughout the description and claims, the word "comprises" and its synonyms do not intend to exclude other technical characteristics, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred performances indicated herein.

### Brief description of the drawings

FIG 1. Shows a view of the multifunction card purpose of this invention.
FIG 2. shows an operational diagram of the telemetry payment system during transfers between functions.
FIG 3. shows an operational diagram of the telemetry payment system when used for cash deposit.
FIG 4. shows an operational diagram of the telemetry payment system with open and closed networks.
FIG 5. shows an operational diagram of the telemetry payment system during multiple balance operations.
FIG 6. shows an operational diagram of the telemety payment system in an example of its operation.

### Detailed description of the modes of applications and examples.

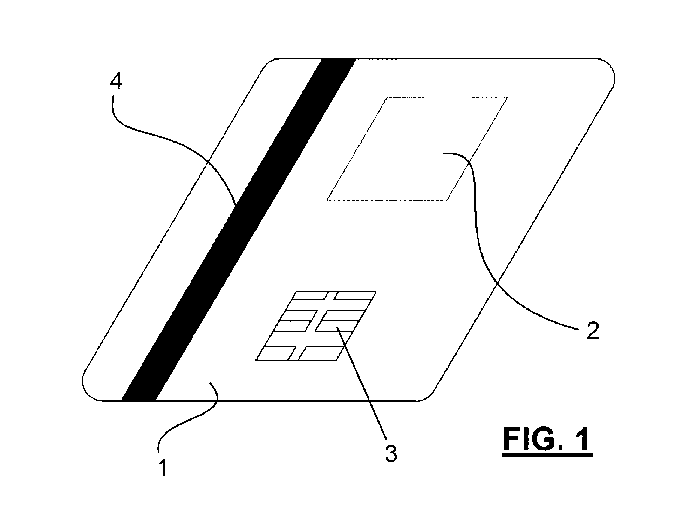

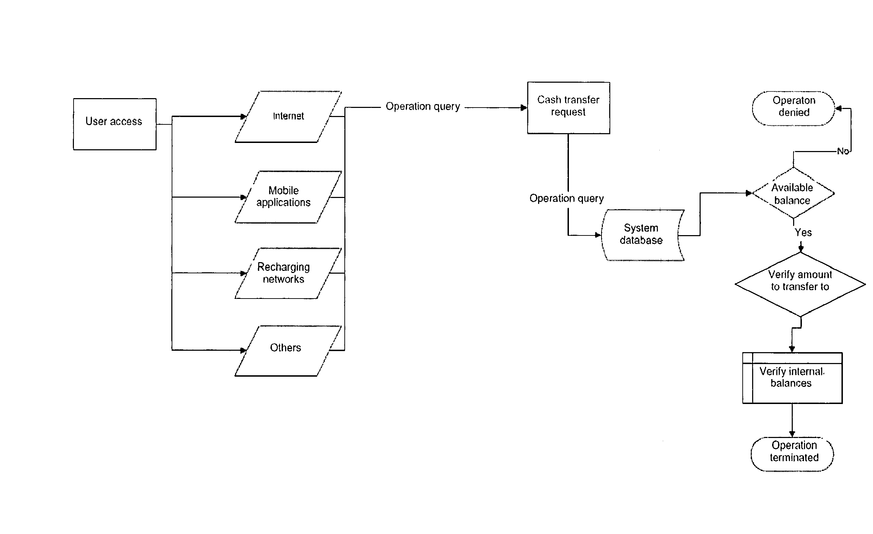

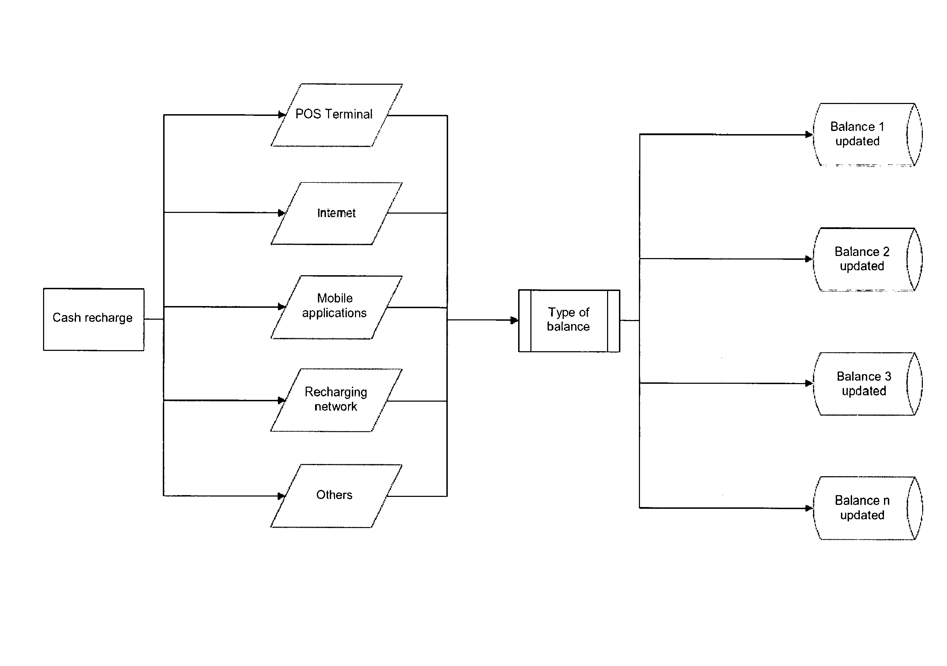

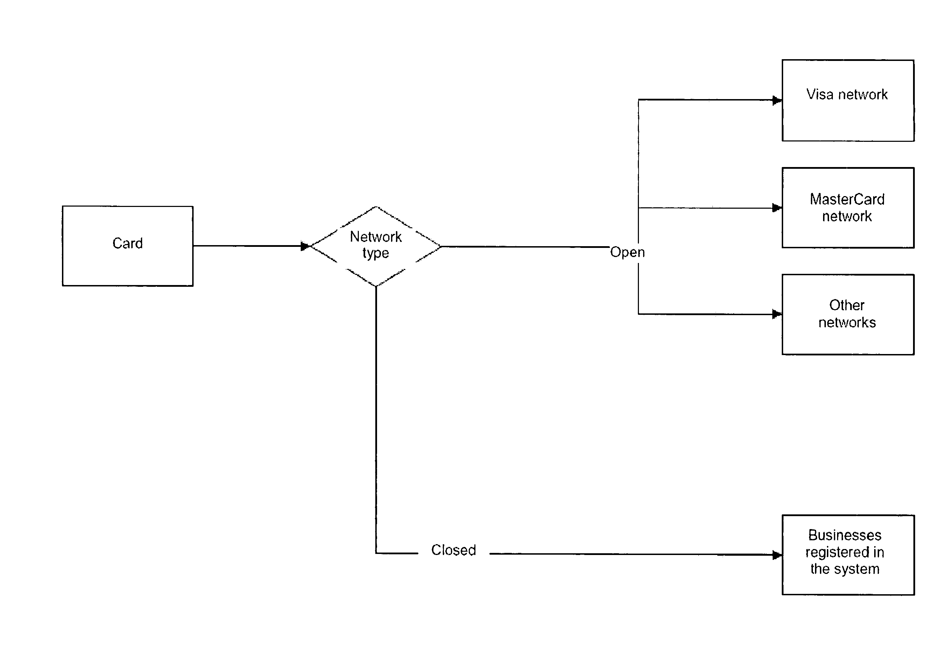

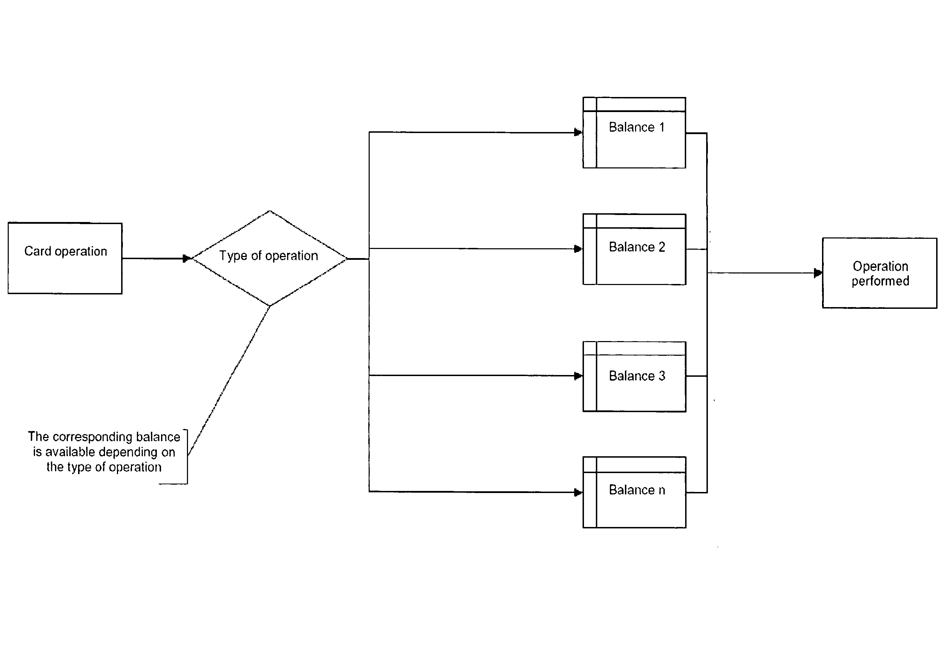

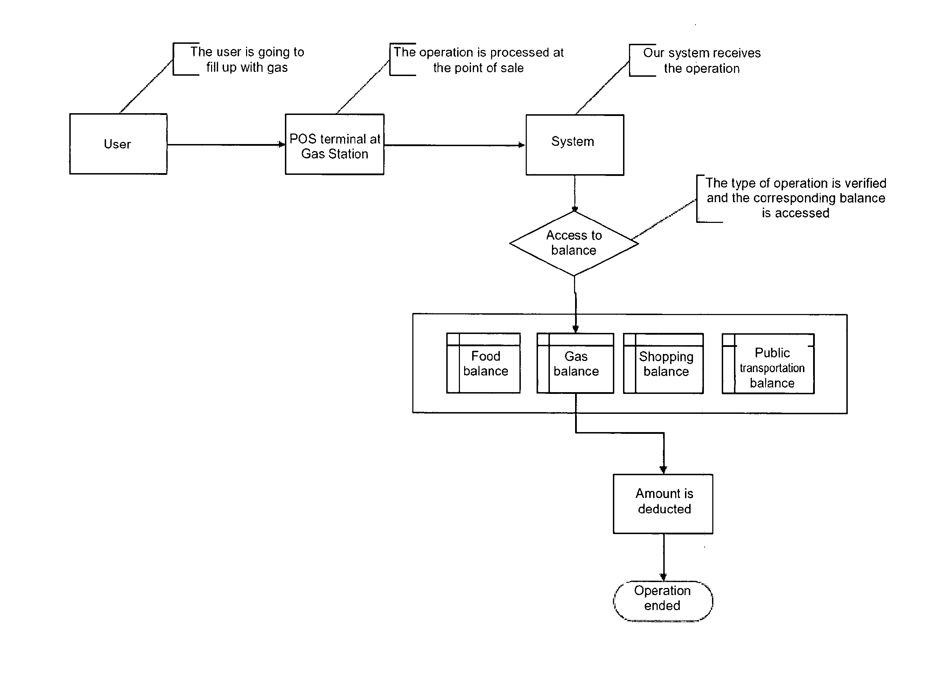

As seen in figure 1, the inventions' multifunction card is essentially comprised of a card body (1), that transparently integrates initial means of radio-frequency (2), and visibly, a second set of electronic means for data storage (3) and a third set of magnetic means for data storage (4); preferably in magnetic strip form and are characterized because each one of these means are configured to hold at least one function selected between: transportation card; card belonging to a particular group; presence control applications; payment applications as credit, debit or closed payment cards; wallet and gift card applications or a combination of the above.

In a practical application, radio frequency medium (2) acts as presence control, the second electronic medium (3) acts as an electronic wallet and the third magnetic medium (4) as a bankcard. During normal use, the card acts as a normal credit card, where the possibility of transferring the balance also exists (where the card is integrated in a telemetry payment system) between functions, as can be seen in figure 2.

The telemetry payment system, as previously indicated, enables the user to transfer balance between functions; this way, the user accesses (21) a select access medium (22) selected between: Internet, mobile application, recharging network or other equivalent ones and it requests the balance transfer between functions (23) to a system database (24) where the available balance is queried (25), denying the operation if there is an insufficient balance (26) or approving it and verifying the balance to transfer (27), adjusting internal balances (29) and finalizing the operation.

This operation is different from the simple remote deposit described in figure 3, where the user accesses the balance recharge (31) through a system access (32), which is one selected between: POS terminal (TPV), internet, mobile application, charge network or other equivalent choices; and where the system will analyze the type of balance (33) that wants to be recharged and updating each of the balances (34).

As previously mentioned, the multifunction card may be utilized in open or closed networks, as indicated in figure 4, where according to the type of network (41), the operation will correspond with this type of network: Open operation (42) in visa® or MasterCard® type networks and/or closed operation (43) in private networks, with businesses registered in the system.

One of the main functionalities of the system and the multifunction card is its multiple balance capability, as shown in figure 5, where depending on the type of operation (41) performed with the card (40), an n balance is available, balance limited to the type of operation, and limiting card purchases by multiple parameters, such as amount, date, area, or any other where the card has system supervision at each point of sale; additionally, the card and system are configured so that each function or support has a specific designated balance, which is capable of being sub-divided, and also able to be transferred.

### Example of system and card operation during a purchase

Figure 6 shows an example of a purchase using the payment system and the described card. This way for example, the user (60) wishes to refuel gasoline and pay for this service at the Gas Station's POS terminal (TPV) (61) and accessing the telemetry payment system (62), where it accesses the system database and verifies the type of operation, also verifying the applicable amount corresponding to this operation (if it has any type of limit, restrictions or a specific amount for this operation) (63), and by accessing the gas balance (64) the amount of this operation is deducted (65) without deducting from other available balances (66) and thus considering the operation finalized.

## Claims

1. Multifunction card that is essentially comprised of a card body (1), which is comprised of initial and transparent radio-frequency media (2) and a second set of electronic media for data storage that is visible, (3) and a third set of magnetic media for data storage (4) in the form of a magnetic strip **characterized because**
each one of these mediums (1,2,3,4) is configured to integrate at least one of the selected functions between: transportation card; cards belonging to a particular group; processes for presence control; payment processes whether they are credit, debit or closed payment cards; cash card and gift card processes or a combination of the processes previously mentioned.

2. Telemetry payment system with the multifunction card of claim 1 that includes remote system access, operations verification and a means for controlling the balance of each process of the multifunction card of claim 1, based on user and/or system administrator adjustable rules which determine balances, their limits and/or subdivisions of each and is **characterized because** it includes a means for transferring cash between functions and remote cash deposit in each of the multifunction card functions.

3. Telemetry payment system of claim 2 characterized because during balance transfer between functions, the user accesses (21) an access media (22) selected between: Internet, mobile application, charge network or other similar ones and requests the balance transfer between functions (23) to a system database (24) where the available balance is queried (25), denying the operation if there is an insufficient balance (26) or approves it and verifies the balance to transfer to (27), adjusting internal balances (29) and finalizing the operation.

4. Telemetry payment system of claim 2 characterized because during remote balance recharge, the user accesses the cash recharge (31) through a system access medium (32), which is one selected between: POS terminal (TPV), internet, mobile application, recharge network or other equivalent choices; and where the system analyzes the type of balance (33) that wants to be recharged, updating each of the balances (34).

5. Telemetry payment system of claims 2 to 4 characterized because it can be used in open networks or in closed networks, where according to the type of network (41), the operation corresponds to this type of network: open operation (42) in Visa® or MasterCard® type networks and/or closed operation (43) in private networks with businesses that are registered in the system.

6. The telemetry payment system of claims 2 to 5 characterized because, depending on the type of operation (41) to be performed with the card (40), an n balance is available, with this availability depending on the type of operation performed, limiting card purchases by a set of rules and restrictions such as the amount, date, sector, or any other where there is a system monitoring of the card at each point of sale; and also, where the card and system are configured so that each function or media has a specific balance assigned, which is capable of being subdivided, and each subdivision is able to be transferred.

7. Telemetry payment system according to claims 2 to 6, characterized because the multifunction card of claim 1 has a payment image in telemetry communication networks that assigns a virtual card number to it, which is maintained in the database and enables it to operate against the card balance that is determined for that use; and where it also has the functionality of activating or deactivating an account, which is defined as an amount or balance for internet shopping and where payment can be made remotely, via SMS, electronic mail, or other similar ways, while it is not used and activated only when it is going to be used.
